# EUROPEAN PATENT APPLICATION

(11) **EP 1 267 105 A1**
(43) Date of publication of application: **18.12.2002**
(21) Application number: 02010128.3
(22) Date of filing: 10.05.2002
(51) Int. Cl.: F16J 15/16, F16J 15/447

(54) **Dynamic sealing device**

(30) Priority: 29.05.2001 IT MO20010108
(71) Applicant: Rossi Motoriduttori S.p.A., 41100 Modena (IT)
(72) Inventor: Bavutti, Mario, 41012 Carpi (Prov. of Modena) (IT)
(74) Representative: Modiano, Guido, Dr.-Ing.

(57) **Abstract**

A dynamic sealing device for a gear reducer (R) of the type constituted by a box-like body (C), which is provided with an inlet (2) for a driving shaft (3) and an outlet for a driven shaft and inside which a gear-type reduction assembly is provided adapted to transmit motion from the driving shaft to the driven shaft, comprises, interposed between the driving shaft and the inner rim of the inlet, an annular element (4) for sealing the lubricant of the assembly, which is mounted coaxially and rigidly with respect to the driving shaft and around which a helical containment profile (6) wraps; the profile, in the active configuration of the gear reducer, is adapted to repel toward the inside of the body the lubricant that exits from the inlet.

## Description

The present invention relates to a dynamic sealing device for a gear reducer.

Gear reducers are known which are substantially constituted by a box-like body that has one or more inlets for a driving shaft, associated with a motor, and one or more outlets for a driven shaft, associated with a user device.

The box-like body internally accommodates a set of one or more gears for transmitting the motion from the driving shaft to the driven shaft with a reduction of the angular velocity of the latter with respect to the former.

The correct operation of the gear reducer requires lubrication of the gears with preset quantities of oil, which is contained in the box-like body up to a predefined filling level.

Sealing elements are fitted proximate to the inlets and outlets of the driving and driven shafts respectively and are designed to prevent leakage of the oil from the box-like body.

Conventional sealing elements include synthetic rubber rings, which are accommodated and retained in corresponding circular seats provided in the box-like body at the openings; the rings are mounted coaxially to the shafts and remain in contact with their outer lateral surface.

The sealing rings mounted at the driving shaft inlet wear more significantly and rapidly than the sealing rings mounted at the outlet of the driven shaft.

This entails a number of drawbacks, including the fact that such rubber rings do not ensure an adequate seal that is constant over time and cause undesirable leaks of lubricant at the inlet of the driving shaft.

In the case of gearmotors, in order to eliminate the leaks it is necessary to stop the user machines, disassemble the motor and perform maintenance and/or replace the worn rings, with operations that are particularly slow and laborious, especially if the machines and the motor are bulky.

Furthermore, in the case of machines for processing food products, the lubricant leaks can contaminate and compromise in some way the hygiene and safety not only of the environment but also of the food being processed.

The aim of the present invention is to eliminate the above noted drawbacks of conventional sealing rings by providing a dynamic sealing device for gear reducer that eliminates leaks of lubricant, is effective even if it is applied to shafts that rotate at high speed, and does not require maintenance or replacement operations.

Within this aim, an object of the present invention is to devise a structure that is simple, relatively easy to provide in practice, safe in use, effective in operation and relatively low in cost.

This aim and this and other objects that will become better apparent hereinafter are achieved by the present dynamic sealing device for a gear reducer of the type that comprises a box-like body, which is provided with an inlet for a driving shaft and an outlet for a driven shaft and inside which a gear-type reduction assembly is provided adapted to transmit motion from said driving shaft to said driven shaft, characterized in that it comprises, interposed between said driving shaft and the inner rim of said inlet, an annular element for sealing the lubricant of said assembly, which is mounted coaxially and rigidly with respect to said driving shaft and around which a helical containment profile wraps, said profile, in the active configuration of the gear reducer, being adapted to repel toward the inside of said body the lubricant that exits from said inlet.

Further characteristics and advantages of the present invention will become better apparent from the detailed description of a preferred but not exclusive embodiment of a dynamic sealing device for a gear reducer, illustrated only by way of non-limitative example in the accompanying drawings, wherein:
Figure 1 is a schematic longitudinal sectional view of a portion of a first gear reducer provided with the dynamic sealing device according to the invention;
Figure 2 is a schematic sectional view of a detail of Figure 1, taken along the line II-II;

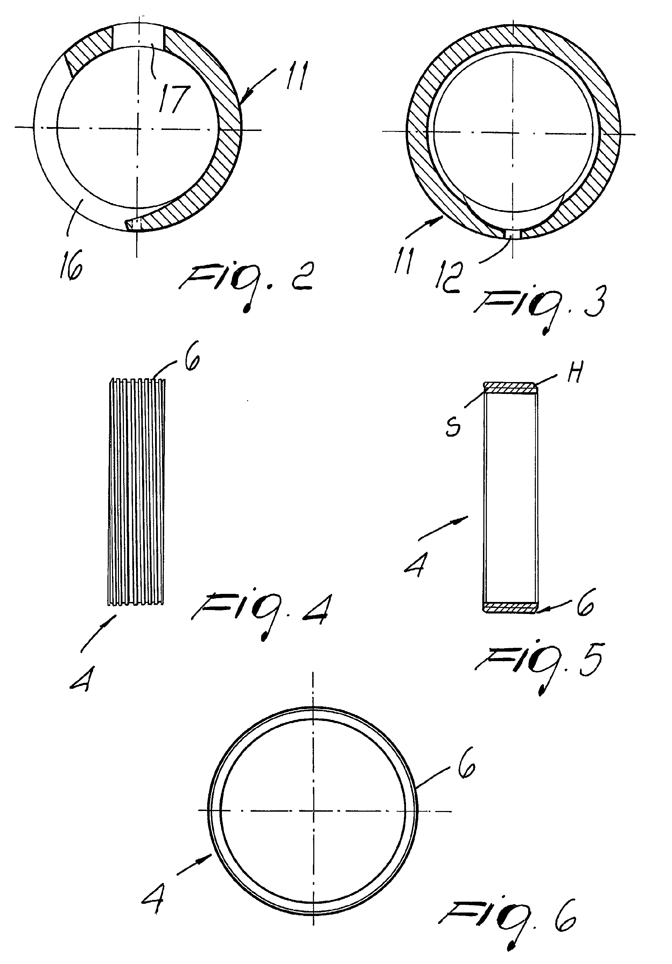

Figure 3 is a schematic sectional view of a detail of Figure 1, taken along the line III-III;
Figure 4 is a side view of the annular element of the device according to the invention;

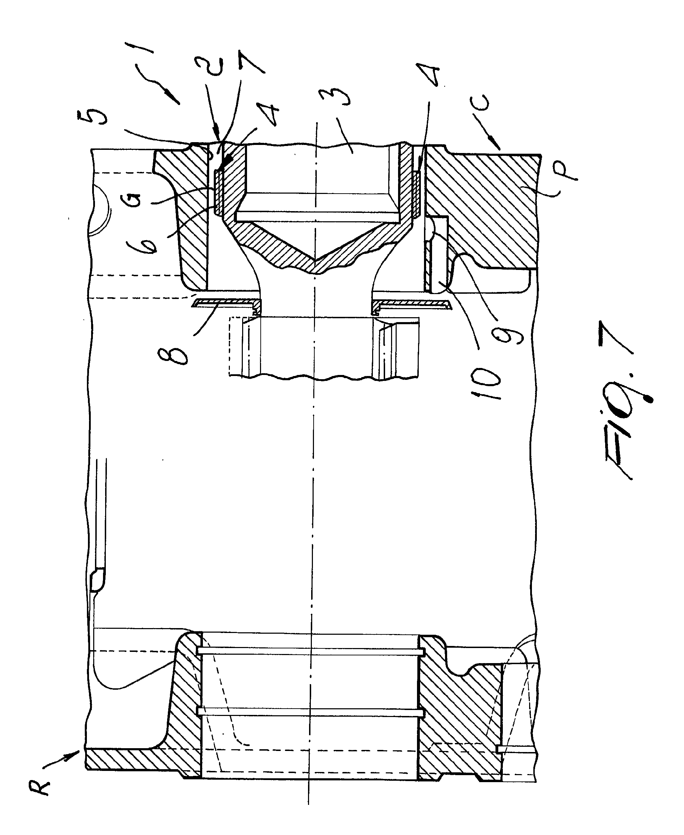

Figure 5 is a schematic sectional view of the element of Figure 4, taken along a longitudinal plane;
Figure 6 is a front view of the element of Figure 4;
Figure 7 is a schematic sectional view, taken along a longitudinal plane, of a portion of a second gear reducer provided with the sealing device according to the invention.

With reference to the figures, the reference numeral 1 generally designates a dynamic sealing device for a gear reducer.

For the sake of simplicity, the above figures illustrate only a limited portion of a generic gear reducer R of the conventionally known kind.

The gear reducer R is constituted by a box-like body C, provided with an inlet 2 for a driving shaft 3, associable with a motor, and with an outlet for a driven shaft, associable with a user device.

The body C internally accommodates a gear-type reduction assembly, which is adapted to transmit motion from the driving shaft 3 to the driven shaft with a reduction of the angular velocity of the latter with respect to the former.

The reduction assembly can be of the type with one or more gears, i.e., it can be constituted by one or more pairs of gears interposed between the driving shaft 3 and the driven shaft.

The correct operation of the gear reducer R requires lubrication of the gears with preset quantities of oil contained in the body C up to a predefined filling level.

The device 1 comprises an annular oil sealing element 4, which is interposed between the driving shaft 3 and the inner rim 5 of the inlet 2.

The annular element 4 is fitted coaxially and rigidly with respect to the driving shaft 3, and a helical containment profile 6 surrounds it; in the active configuration of the gear reducer R, such profile repels into the body C the oil that exits from the inlet 2.

The thickness S of the element 4 and the height H of the profile 6 are, as a whole, smaller than the gap 7 formed between the outer lateral surface of the driving shaft 3 and the inner rim 5 of the inlet 2; a clearance G thus remains which avoids contacts and sliding between the profile 6 and the rim 5.

If the driving shaft 3 rotates with a right-handed angular velocity, the helical profile 6 is left-handed; if the driving shaft 3 rotates with a left-handed angular velocity, the helical profile 6 is right-handed.

The device 1 further comprises a centrifugation disk 8, which is mounted coaxially and rigidly with respect to the driving shaft 3 upstream of the element 4.

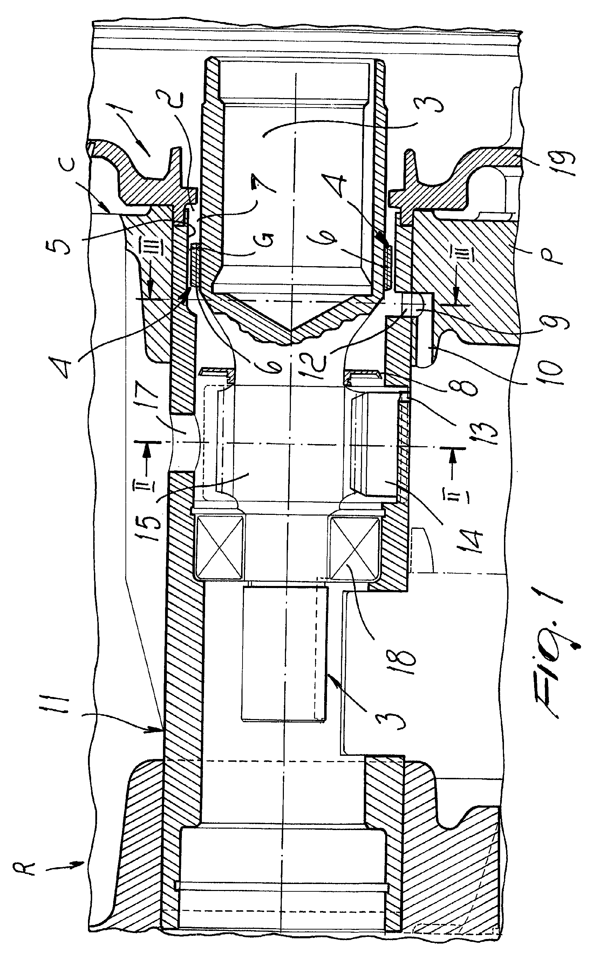

Figure 7 illustrates a portion of a gear reducer R of the single-gear type, while Figure 1 illustrates a portion of a gear reducer R of the multiple-gear type.

In the case of the gear reducer R of Figure 7, the device 1 comprises a slot 9 for draining the oil repelled by the element 4, which is provided in the wall P of the (support) body C in which the inlet 2 is provided.

The slot 9 is arranged below the driving shaft 3 and substantially upstream of the element 4; a channel 10, provided in the wall P, discharges into the body C the oil that exits from the slot 9.

In the case of the gear reducer R of Figure 1, the driving shaft 3, being longer, requires the use of an auxiliary supporting sleeve 11.

The sleeve 11 is inserted in the body C, coaxially to the shaft 3, and has an end that is rigidly associated with the body C and in which the inlet 2 is provided.

The device 1 comprises, in this case, a second slot 12 for draining the oil repelled by the element 4, which is provided in the lower wall of the sleeve 11 upstream of the element 4 and is connected to the slot 9 provided in the wall P of the (support) body C.

Furthermore, the device 1 comprises a hole 13 for discharging the oil provided in the lower wall of the sleeve 11 upstream of the centrifugation disk 8.

The oil discharged by the outlet of the hole 13 is diverted by an outflow wall, not shown, which is associated with the sleeve 11 and is adapted to avoid the reverse flow of the discharged oil inside the sleeve 11.

Advantageously, the wall is adapted to shield and protect the gear 14 of the first reduction gear assembly, which is coupled to the sprocket 15 mounted on the driving shaft 3.

Conveniently, the element 4 is made of a metallic material such as bronze or the like and is keyed or forced when hot onto the driving shaft 3.

The sleeve 11 has a lateral opening 16 for coupling between the sprocket 15 and the gear 14 and has a hole 17 for the passage of the oil.

Furthermore, the reference numeral 18 designates a bearing that is fitted coaxially on the shaft 3 and the reference numeral 19 designates a cover for closing the body C.

The operation of the invention is as follows.

The element 4 rotates rigidly with the driving shaft 3, so that the helical profile 6 applies to the oil that exits from the inlet 2 a thrust that repels it into the body C.

The repelled oil is discharged inside the body C by way of the second slot 12 and/or the slot 9, depending on the type of gear reducer R.

Upstream of the element 4, the disk 8 centrifuges the outgoing oil, further shielding the inlet 2; in the case of Figure 1, the centrifuged oil is discharged into the body C by means of the hole 13, while in the case of Figure 7 the centrifuged oil falls back directly into the body C.

In practice, it has been found that the described invention achieves the intended aim and objects, i.e., it provides a dynamic sealing device for a gear reducer that eliminates lubricant losses and does not require maintenance and replacement interventions.

It is noted that in fact between the body of the gear reducer and the annular sealing element there is a clearance that avoids mutual sliding and wear.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the protective scope of the appended claims.

The disclosures in Italian Patent Application No. MO2001A000108 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A dynamic sealing device for a gear reducer of the type that comprises a box-like body, which is provided with an inlet for a driving shaft and an outlet for a driven shaft and inside which a gear-type reduction assembly is provided adapted to transmit motion from said driving shaft to said driven shaft, **characterized in that** it comprises, interposed between said driving shaft and the inner rim of said inlet, an annular element for sealing the lubricant of said assembly, which is mounted coaxially and rigidly with respect to said driving shaft and around which a helical containment profile wraps, said profile, in the active configuration of the gear reducer, being adapted to repel toward the inside of said body the lubricant that exits from said inlet.

2. The device according to claim 1, **characterized in that** the thickness of said annular element and the height of said profile are, as a whole, smaller than the gap defined between the outer lateral surface of said driving shaft and said inner rim of the inlet.

3. The device according to one or more of the preceding claims, **characterized in that** said helical profile is left-handed, said driving shaft being adapted to rotate with a right-handed angular velocity.

4. The device according to one or more of the preceding claims, **characterized in that** said helical profile is right-handed, said driving shaft being adapted to rotate with a left-handed angular velocity.

5. The device according to one or more of the preceding claims, **characterized in that** it comprises a centrifugation disk, which is mounted coaxially and rigidly with respect to said driving shaft ahead of said annular element.

6. The device according to one or more of the preceding claims, **characterized in that** it comprises a slot for draining the lubricant repelled by said annular element, said slot being provided in the wall of said box-like body in which said inlet is provided and being arranged below said driving shaft and substantially ahead of said annular element.

7. The device according to claim 6, **characterized in that** in said wall a discharge channel is provided inside the box-like body for the lubricant that exits from said slot.

8. The device according to one or more of the preceding claims, **characterized in that** it comprises a slot for draining the lubricant repelled by said annular element, said slot being provided upstream of said element in the lower wall of an auxiliary supporting sleeve of the driving shaft which is coaxial thereto, can be inserted in said body, and has an end in which said inlet is provided.

9. The device according to claim 8, **characterized in that** it comprises a lubricant discharge hole provided in the lower wall of said sleeve upstream of said centrifugation disk.

10. The device according to claim 9, **characterized in that** it comprises an outflow wall that is associated with said sleeve proximate to the outlet of said hole and is adapted to prevent the reverse flow of the lubricant discharged inside said sleeve.

11. The device according to one or more of the preceding claims, **characterized in that** said annular element is made of a metallic material such as bronze or the like.

12. The device according to one or more of the preceding claims, **characterized in that** said annular element is keyed by forcing on said driving shaft.
